# EUROPEAN PATENT APPLICATION

(11) **EP 0 963 835 A1**
(43) Date of publication of application: **15.12.1999**
(21) Application number: 98108123.5
(22) Date of filing: 05.05.1998
(51) Int. Cl.: B29D 7/01, B29C 55/18

(54) **Discontinuously expandable web materials**

(71) Applicant: THE PROCTER & GAMBLE COMPANY, Cincinnati, Ohio 45202 (US)
(72) Inventor: Fuchs, Christofer, 61476 Kronberg (DE); Divo, Michael, 63181 Friedrichsdorf (DE); Busam, Ludwig, 65510 Hünstetten (DE)
(74) Representative: Canonici, Jean-Jacques

(57) **Abstract**

The present invention is a web material which can be used in the production of large quantities of articles which are assembled from, inter alia, continuously fed web materials. In particular, the web material of the present invention can be expanded by a predetermined amount whilst exhibiting a relatively low resistance to expansion. This material property is assessed in the Discontinuous Expansion Test which determines the Relative Expansion Tension reduction during the discontinuous expansion. A web material according to the present invention has a Relative Expansion Tension Reduction of at least 50%. Another object of the present invention is the process for making such discontinuously expandable web materials comprising the step of incorporating longitudinal expansion means and optionally tearable expansion obstruction means into the web material.

## Description

### FIELD OF THE INVENTION

The present invention relates to web materials which can be used in the production of large quantities of articles which are assembled from, inter alia, continuously fed web materials. In particular, the present invention relates to those web materials which are expandable by a predetermined elongation with relatively low resistance.

### BACKGROUND

Web materials are well known in the prior art, especially for use in the industrial manufacturing of large quantities of discrete articles. The web materials typically have a two dimensional configuration with the longitudinal dimension being substantially larger than the transverse dimension. Usually, the longitudinal dimension of a web material is also substantially larger than the length of the piece of web material actually used in the production of a single discrete article. During the manufacturing process, the web material is supplied in longitudinally continuous form and then cut into discrete pieces during the manufacturing process.

For many applications, it is preferable to use web materials which are longitudinally expandable without loosing its functionality. These web materials are especially useful when they are attached to elements of varying size or position. The expendability of the web material allows them to adapt to the new size or position of the element they are attached to.

In some cases, it is desirable that the web material exhibits a specific elongation behavior. In order to restrict the growth or movement of the attached element to a certain amount, the web material should expand by a limited amount only whilst exhibiting only a low resistance during this expansion. Once being expanded, the web material should exhibit properties similar to a conventional web material.

In U.S. patent applications No. 5,518.801 issued to Chappell, No. 5650214 issued to Anderson, and No. 5,691,035 issued to Chappell, web materials exhibiting elastic-like behavior are disclosed. Specifically, these web materials are described to have an elongation and recovery with a definite and sudden increase in the force resisting elongation where this definite and sudden increase in resistive force restricts further elongation against relatively small elongation forces.

Whilst progress has been made towards a web material that is expandable by a predetermined amount, this expansion requires an essentially constant expansion tension.

There remains, however, the problem to provide a web material that can be expanded by a predetermined amount with relatively low resistance.

The present invention is a discontinuously expandable web materials having a longitudinal dimension and a transverse dimension substantially smaller than said longitudinal dimension and having at least one longitudinal expansion means which are characterized in that the Relative Expansion Tension Reduction is at least 50%, preferably at least 75%, even more preferably at least 90% when such a web material is submitted to the Discontinuous Expansion Test.

It is a further object of the present invention to provide a discontinuously expandable web material that has an expansion tension at the Discontinuous Expansion Threshold larger than 1 Newton per 0.0254 meter and that has an expansion tension at the Discontinuous Expansion Point smaller than 0.5 Newton per 0.0254 meter, preferably smaller than 0.25 Newton per 0.0254 meter, even more preferably smaller than 0.1 Newton per 0.0254 meter as measured in the Discontinuous Expansion Test.

It is an even further object of the present invention to provide a discontinuously expandable web material that exhibits a relative elongation at the Tearing Point of at least 30%, preferably at least 50% as measured in the Discontinuous Expansion Test.

It is a further object of the present invention to provide a discontinuously expandable web material that comprise a first region and a second region wherein said first region has a different basis weight than said second region. It is an even further object of the present invention to provide such a web material that has a Relative Basis Weight Deviation of less than 10%, preferably less than 5%, when it is submitted to the Basis Weight Deviation test.

It is a further object of the present invention to provide a discontinuously expandable web material according which has a contraction tension of less than 0.5 Newton per 0.0254 meter when said web material is submitted to the Contraction Force At Discontinuous Expansion Test.

It is a further object of the present invention to provide a discontinuously expandable web material that comprising at least one region which exhibits an monotonously increasing tensile force with increasing elongation when said region is submitted to the Expansion Tension Test.

It is a further object of the present invention to provide a discontinuously expandable web material which additionally comprises at least one tearable expansion obstruction means.

Additionally it is an object of the present invention to provide a process for making a discontinuously expandable web material. The process comprises the steps of forming a web, stabilizing a web, and incorporating longitudinal expansion means as well as tearable expansion obstruction means into the web material.

### BRIEF DESCRIPTION OF THE DRAWINGS

FIG. 1: Expansion tension vs. relative elongation curve of a web material according to the present invention.
FIG. 2: Expansion tension vs. relative elongation curve of a comparative non-woven web material.
FIG. 3: Expansion tension vs. relative elongation curve of a comparative film web material.
FIG. 4: Expansion tension vs. relative elongation curve of a comparative web material exhibiting elastic-like behavior.

### DETAILED DESCRIPTION OF THE INVENTION

The present invention relates to web materials which are used in the production of large quantities of articles which are assembled from, inter alia, continuously fed web materials. Preferably, these web materials are supplied as roll stock and include fibrous webs, non-fibrous webs, and foams.

The term "web material" as used herein refers to a sheet-like material, or to a composite or laminate comprising two or more sheet-like materials. For example, a web material can be a fibrous web, a non-fibrous web, a foam, or the like.

The web material of the present invention is essentially two-dimensional, i.e. the thickness of the web material is much smaller than its longitudinal and its transverse dimension. Additionally, the transverse dimension of the web material is substantially smaller than its longitudinal dimension. The longitudinal dimension preferably exceeds the transverse dimension by a factor of 100, most preferably the longitudinal dimension of the web material of the present invention is essentially infinite.

Furthermore, the web material of the present invention has a first external surface and a second external surface opposite the first surface. The web material of the present invention may also comprise hidden surfaces including first and second hidden surfaces according to which external surface they are connected to. At least part of each hidden surface is in contact with at least a part of one other hidden surface such as after folding a conventional web material. These hidden surfaces may become part of the respective external surface during the expansion of the web material of the present invention.

One embodiment of the web material of the current invention is a fibrous web, such as a tissue web, a non-woven web, a woven web, a knit web, or the like. Such fibrous webs can comprise natural fibers (e.g., wood or cotton fibers), synthetic fibers (e.g., polyester or polypropylene fibers), or a combination of natural and synthetic fibers. The non-woven web materials may be - without limiting to these - by processes commonly referred to as spunlace, spunbond, meltblown, carded, and/or air-through or calendar bonded. The fibrous webs of the present invention may be absorbent or non-absorbent, liquid pervious, or liquid impervious.

Another embodiment of the web material of the present invention is non-fibrous web such as a film. Non-fibrous web materials of the present invention may be comprised of polyolefins such as polyethylenes, including linear low density polyethylene (LLDPE), low density polyethylene (LDPE), ultra low density polyethylene (ULDPE), high density polyethylene (HDPE), or polypropylene and blends thereof with the above and other materials. Examples of other suitable polymeric materials which may also be used include, but are not limited to, polyester, polyurethanes, compostable or biodegradable polymers, heat shrink polymers, thermoplastic elastomers, metallocene catalyst-based polymers (e.g., INSITE™. available from Dow Chemical Company and Exxact™ available from Exxon), and breathable polymers.

The non-fibrous web material may also be comprised of an apertured film, macroscopically expanded three-dimensional formed film, absorbent or foam, filled composition, or laminates and/or combinations thereof.

Web materials of the present invention may include laminates of the above mentioned materials. Laminates may be combined by any number of bonding methods known to those skilled in the art. Such bonding methods include but are not limited to thermal bonding, adhesive bonding (using any of the number of adhesives including but not limited to spray adhesives, hot melt adhesives, latex based adhesives and the like), sonic bonding and extrusion laminating whereby a polymeric film is cast directly onto a substrate, and while still in a partially molten state, bonds to one side of the substrate, or by depositing meltblown fibers non-woven directly onto a substrate.

Alternatively, the web material of the present invention may also comprise discretely distributed substances which are attached to the web material.

An essential element of the web material of the present invention is that it comprises at least one longitudinal expansion means.

The term "longitudinal expansion means" as used herein refers to a means that allows the web material to expand in longitudinal direction by a predetermined amount. After this expansion, the web material preferably exhibits a behavior under longitudinal tension similar to a conventional web material.

Preferably, the longitudinal expansion of a web material of the present invention is irreversible, after the predetermined longitudinal expansion there is no contraction tension pulling the web material back to its unexpanded configuration.

Generally, a region of the web material whose perimeter coincides with the perimeter of a longitudinal expansion means can be characterized by having an at least partially curved longitudinal surface contour. As a result, the longitudinal surface contour length of this web material region is substantially longer than the longitudinal distance of the two transverse edges delimiting the region. Specifically, the difference between the surface contour length and the longitudinal distance between the delimiting transverse edges is the predetermined expansion length accessible to the region of the web material comprising the longitudinal expansion means.

The term "longitudinal surface contour length" as used herein refers to the length of a region of a web material whereby the length is measured along a possibly curved path which follows the longitudinal dimension of the external and hidden surfaces as they are connected to each other.

A preferred embodiment of the longitudinal expansion means of the present invention is a double transverse fold, which upon unfolding allows the web material to substantially increase its longitudinal dimension.

A particularly preferred embodiment of the longitudinal expansion means of the present invention having a curved longitudinal surface contour is comprised in a web material according to the present invention which is obtained by arranging a conventional precursor web material in a transverse z-fold.

The term "transverse z-fold" as used herein refers to two transverse folds which are arranged such that the longitudinal cross section of the web material looks like the letter "z" when looked at from the side. Specifically, the first surface of the precursor web material between the first transverse fold and the second transverse fold is in close proximity to the first surface on the opposite side of the first transverse fold and the second surface of the precursor web material between the first transverse fold and the second transverse fold is in close proximity to the second surface on the opposite side of the second transverse fold. The z-fold allows the web to comprise a longitudinal expansion means without loosing its primarily two dimensional configuration.

Another preferred embodiment of the longitudinal expansion means of the present invention is a plurality of transverse folds which are in close proximity to each other, called accordion fold hereafter.

The longitudinal expansion means of the present invention may also be but are not limited to regions of the web material which are mechanically strained, creped, corrugated, "ring rolled", or pleated. The process of "ring rolling" a web material is described in U. S. patent application No. 4,517,714 issued to Sneed. All of these treatments have to be carried out in the transverse direction to render the web material longitudinally expandable.

A particularly preferred embodiment of the web material of the present invention comprises a plurality of longitudinal expansion means which are spaced apart longitudinally allowing the web material to locally expand at the positions of the longitudinal expansion means. An even more preferred embodiment has the longitudinal expansion means at longitudinally equal distances to allow a periodic local expansion of the web when it is converted.

Preferably, the web material of the present invention additionally comprises at least one tearable expansion obstruction means.

The term "tearable expansion obstruction means" as used herein refers to a means that is preventing the longitudinal expansion of a web material comprising a longitudinal expansion means. Furthermore, the tearable expansion obstruction means are tearable by longitudinal tension applied to the web. After tearing the tearable expansion obstruction means the longitudinal expansion means can be utilized to longitudinally expand the web material at the position of the respective longitudinal expansion means.

Generally, the tearable expansion obstruction means of the present invention holds the delimiting transverse edges of a web material region comprising a longitudinal expansion means at a distance smaller than the longitudinal surface contour length between the two delimiting transverse edges.

Preferably, the tearable expansion obstruction means impedes the relative motion of hidden surface regions of the web material which are spaced apart along the longitudinal surface contour. This can be achieved by at least partial direct bonding or at least partial indirect bonding such as edge bonding.

The tearable expansion obstruction means of the present invention include but are not limited to adhesive bonding, cohesive bonding, ultrasonic bonding, heat bonding, pressure bonding, friction bonding, autogenous bonding or combinations of different bonding methods.

The tearable expansion obstruction means may also be a mechanical fixation by a mechanical fixation device such as a bracket or a thread, or by fiber entanglement.

Alternatively, the tearable expansion obstruction means may be a region of the web material with low or zero longitudinal expandability which is arranged longitudinally parallel to a longitudinally expandable region of the web material.

In another preferred embodiment of the web material of the present invention, the tearable expansion obstruction means are positioned close to the longitudinal edges of the web material to avoid possible compromization of the web integrity in the center of the web by tearing the tearable expansion obstruction means. Alternatively, the tearable expansion obstruction means can be arranged in isolated spaced apart positions to minimize compromization.

The tearable expansion obstruction means of the present invention can be torn apart by applying a longitudinal tension to the web material without tearing the entire web. Therefore, the tear force of the tearable expansion obstruction means must be substantially lower than the tear force of the web material.

The web material of the present invention shows a discontinuous expansion behavior. It expands with relatively low resistance up to a certain extent and then shows a rapid increase in expansion tension, essentially limiting its expansion to that certain extent. In its unexpanded state, the web material of the present invention exhibits a expansion tension relatively higher than the expansion tension during that limited expansion with low resistance. This allows the conversion of the web material in its unexpanded state being followed by a rapid expansion of the web caused by increased longitudinal web tension.

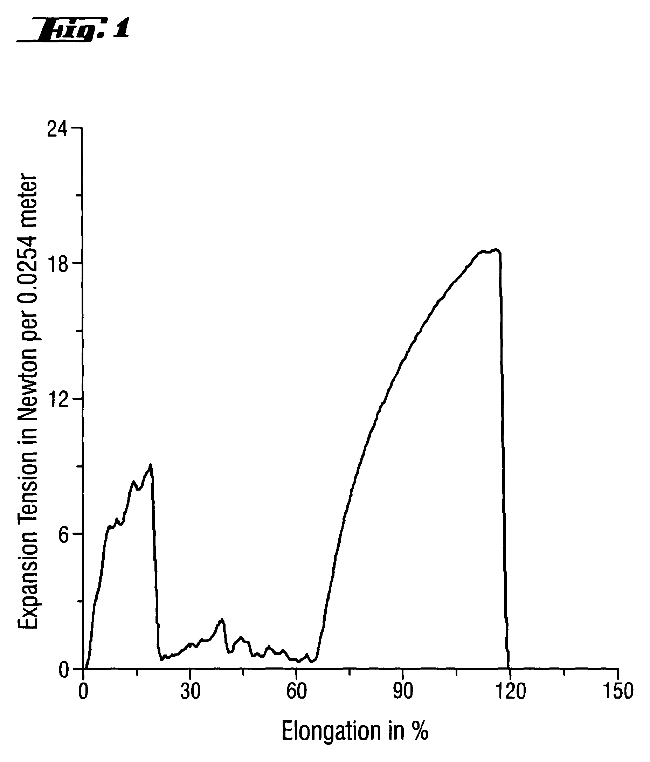

A typical expansion tension vs. relative elongation of the web material of the present invention is shown in FIG. 1. The expansion vs. relative elongation curve of the web material of the present invention exhibits at least two local maxima. The maximum having the largest elongation corresponds to the Tearing Point of the web whereas the maximum with the smallest elongation reflects the Discontinuous Expansion Threshold. The absolute minimum intermediate these two maxima lies within the discontinuous expansion region and will be called Discontinuous Expansion Point hereinafter.

Preferably, the web material of the present invention has a Relative Expansion Tension Reduction of at least 50%, more preferably 75%, even more preferably of 90%. This parameter which is obtained via the Discontinuous Expansion Test disclosed in the present application quantifies how much the expansion tension of a web material is reduced when it is expanded to the Discontinuous Expansion Point.

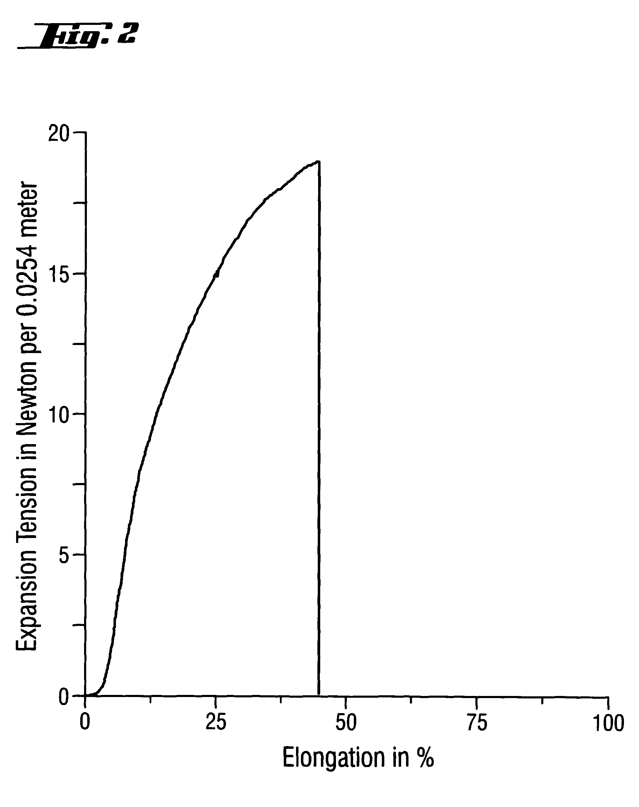

FIG. 2 shows the expansion tension vs. relative elongation curve for a conventional web material, exemplified by a non-woven web material available from Fiberweb Sweden AB of Norrköping, Sweden, under the designation Holmestra D018B, having a basis weight of 18 grams per square meter. This curve clearly differs from the curve of a web material of the present invention in that this curve comprises only one expansion tension maximum. Thus, conventional web materials like this non-woven do not lie within the scope of the present invention.

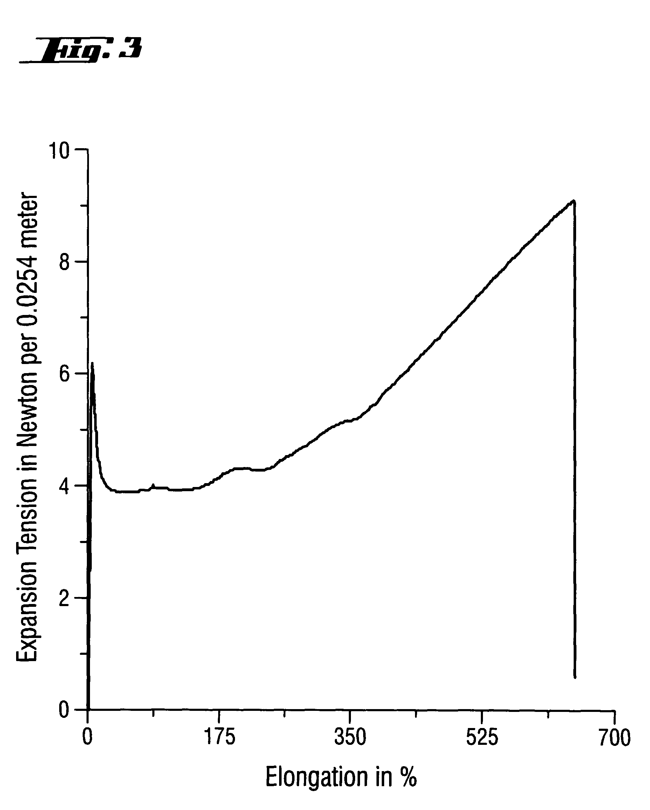

FIG. 3 shows the expansion tension vs. relative elongation curve of example 3, a conventional film web material available from American National Can of Chicago, Illinois/USA, under the designation Parafilm. This curve has two local maxima and the expansion tension drops by about 37 % between the two maxima. However, this web material is not within the scope of this invention since a web material according to this invention needs to have a Relative Expansion Tension Reduction of at least 50%.

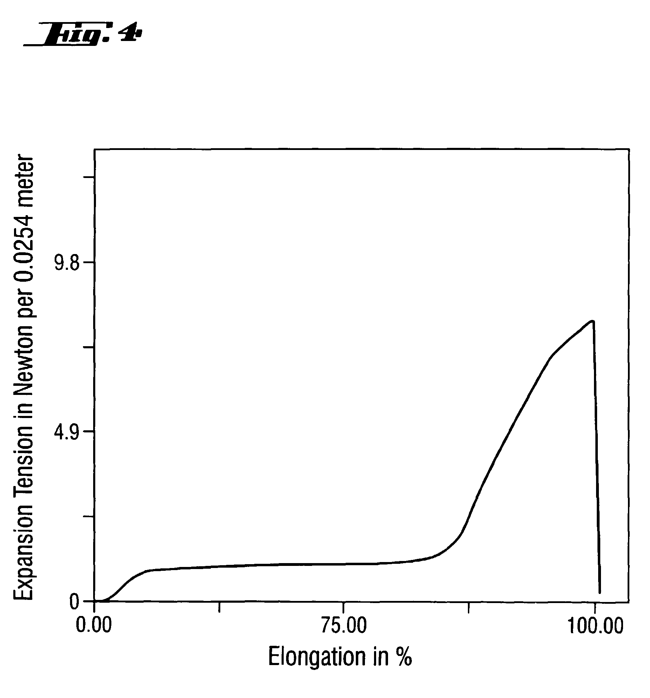

FIG. 4 shows the expansion tension of example 4, a web material having an elastic-like behavior according to U.S. patent application No. 5,691,035. This curve comprises only one maximum at the tearing point. This web material therefore does not fall within the scope of the present invention.

Preferably, the expansion tension of the web material of the present invention at the Discontinuous Expansion Threshold is higher than 1 Newton per 0.0254 meter whilst the expansion tension at the Discontinuous Expansion Point is less than 0.5 Newton per 0.0254 meter, more preferably less than 0.25 Newton per 0.0254 meter, even more preferably less than 0.1 Newton per 0.0254 meter.

A preferred embodiment of the present invention is a web material that comprises a first region and a second region, both regions extending longitudinally and including the entire transverse dimension of the web material, where the second region has a higher basis weight than the first region. In an even more preferred embodiment of the web material of the present invention, the second region comprises at least one longitudinal expansion means whereas the first region does not comprise a longitudinal expansion means. Even more preferably, the basis weight of the second region is chosen such that after the expansion by means of the longitudinal expansion means the basis weight of the second region is essentially similar to the basis weight of the first region. This property is measured using the Basis Weight Deviation Test. Preferably, the Relative Basis Weight Deviation of the web material of the present invention is less than 10%, more preferably less than 5%. The advantage of this particular embodiment is that after the expansion by the predetermined amount the web material has an essentially uniform basis weight.

Preferably, the web material of the present invention exhibits an overall relative elongation of at least 50% at the Tearing Point when submitted to the Discontinuous Expansion test, more preferably a an overall relative elongation of at least 75%.

Preferably, the web material of the present invention or at least a region thereof which is comprising at least one longitudinal expansion means is expandable by at least 50%, more preferably by at least 100%, even more preferably by at least 150% of their original untensioned length after deactivation of the tearable expansion obstruction means.

The relative expandability is quantified with the Expansion After Deactivation Test disclosed in this application.

Another aspect of the present invention is the process for making a web material according to the present invention. Alternatively, the web material of the present invention can also be obtained by modifying a conventional web material.

Preferably, the process of the present invention of making a web material comprises the steps of (A) forming a web material, (B) stabilizing the web material, (C) incorporating unexpanded longitudinal expansion means into the web material, (D) incorporating deactivatable expansion obstruction means into the precursor web material, (E) optionally, unwinding the web material, (F) optionally, longitudinally slitting the web material, and (G) optionally, rewinding the web material.

Therein, the combination of incorporating longitudinal expansion means into a conventional precursor web with the incorporation of deactivatable expansion obstruction means in order to prevent the expansion of the longitudinal expansion means allows the production of web materials according to the present invention.

The order of the steps does not necessarily have to be in the above order. It is possible to carry out step B at any point after step A, in particular after step D. Steps C and D may also be carried out intermediate steps E and G or after step G.

Preferably, the step of incorporating longitudinal expansion means into the web material is carried out by transversely folding the web, even more preferably in a z-fold or in an accordion-fold. Alternatively, the longitudinal expansion means are incorporated into the web by at least partially pre-stretching the web material to render it longitudinally expandable. Possible processes for this task are creping, corrugating, "ring rolling", or pleating. All of these treatments have to be carried out in the transverse direction to render the web material longitudinally expandable.

Preferably, the deactivatable expansion obstruction means are incorporated into the web material by bonding surfaces or edges which spaced apart along the surface contour. These surfaces or edges have been brought into close proximity to each other by the incorporation of the longitudinal expansion means into the web material. Possible methods to achieve these bonds include but are not limited to adhesive bonding, ultrasonic bonding, heat bonding, pressure bonding, friction bonding, autogenous bonding or combinations of different bonding methods. Alternatively, the bonds can be achieved by incorporating mechanical fixation devices such as brackets, threads, or the like into the web material. Another possibility to incorporate deactivatable expansion obstruction means into the web material is the entanglement of fibers of different surface or edge regions e.g. by needling, hydroentangling, or the like.

### EXAMPLES

### Example 1: Z-folded non-woven web material

This example is provided to demonstrate the principle of the present invention.

A spunbond-meltblown-spunbond non-woven web material, available from Corovin GmbH of Peine, Germany, under the designation MD3000, mostly consisting of polypropylene fibers was cut in a longitudinal strip having a length of 20 centimeters and a width 2.54 centimeters. The web material was arranged in a transverse z-fold by the following steps:

At positions located 5 and 8 centimeters away from one of the transverse edges, the strip of web material was transversely folded.

The transverse fold located at 8 centimeters was folded back onto the web material touching it about two centimeters away from the transverse edge.

To secure the z-fold the longitudinal edges of the three layers forming the z-fold were heat bonded up to a depth of one millimeter by applying a temperature a temperature slightly higher than the melting point of the fibers of the non-woven web material.

The final length of the z-folded strip of web material was 140 millimeters.

The Relative Expansion Tension Reduction of Example 1 was 37% when it was submitted to Deactivated Expansion Obstruction Test.

### Example 2: Comparative non-woven web material

Example 2 is a spunbond non-woven web material made from polypropylene fibers having a basis weight of 18 grams per square minute. The web material is available from Fiberweb Sweden AB of Norrköping, Sweden, under the designation Holmestra D018B.

### Example 3: Comparative film web material

Example 3 is a polymer film web material available from American National Can of Chicago, Illinois/USA, under the designation Parafilm.

### Example 4: Comparative web material having elastic-like behavior

Example 4 is a thin polymeric film web material consisting mostly of linear medium density polyethylene plus linear low density polyethylene available from Tredegar Inc. of Terre Haute, Indiana/USA, under the designation X-8998 which has been formed according to U.S. patent application No. 5,691,035.

### METHODS

### Expansion Tension Test

The Expansion Tension Test is used for measuring expansion tension versus percent elongation properties. The tests are performed on a standard stress strain curve measuring apparatus such as a Zwick Model 1445, available from Zwick GmbH & Co. of Ulm, Germany, which is interfaced to a Compaq Prolinea 466 computer available from Compaq Computer Corporation of Houston, Texas/USA, using Zwick 7047.4b software which is available from Zwick GmbH & Co. of Ulm, Germany. All essential parameters needed for testing are input in the Zwick 7047.4b software for each test. Also, all data collection, data analysis and graphing are done using the Zwick 7047.4b software.

The samples used for this test are 25.4 millimeters wide by 140 millimeters long with the long axis of the sample cut parallel to the longitudinal dimension of the web material. The sample should be cut with a sharp die cutter or some suitably sharp cutting device designed to cut a (25.4+/-1) millimeter wide sample without damaging the edges of the sample. The sample should be cut so that an area representative of the longitudinal expansion means is represented. There will be cases (due to variations in either the size or distance of the longitudinal expansion means) in which it will be necessary to cut either larger or smaller samples than is suggested herein. In this case, it is very important to note (along with any data reported) the size of the sample, which area of the web material it was taken from, and preferably include a schematic diagram of the representative area used for the sample. Also, the results need to be calculated taking into account the different length. Three samples of a given material are tested.

The grips of the Zwick consist of air actuated grips designed to concentrate the entire gripping force along a single line perpendicular to the direction of testing stress having one flat surface and an opposing face from which protrudes a half round to minimize slippage of the sample. The distance between the lines of gripping force should be 100 millimeters as measured by a steel rule held beside the grips. This distance will be referred to from hereon as the "gauge length". The sample is mounted in the grips with its long axis perpendicular to the direction of applied percent elongation. The crosshead speed is set to 500 millimeter per minute. The crosshead elongates the sample until the sample breaks.

The result is a curve of the expansion tension as a function of the relative elongation of the web material is obtained.

While the test methods described above is useful for many of the web materials of the present invention it is recognized that the test method may have to be modified to accommodate some of the more complex web materials within the scope of the present invention.

### Discontinuous Expansion Test

The Discontinuous Expansion Test is used to determine the Discontinuous Expansion Threshold, the Tearing Point, and the Relative Expansion Tension Reduction of a web material.

First, three identical samples of the web material, called samples A1, A2, and A3 hereafter, are submitted to the Expansion Tension Test.

From the resulting expansion tension vs. relative elongation curve for sample A1, the local maxima of the expansion are obtained together with the respective relative elongations (The submitted web material is not discontinuously expandable according to the present invention if the expansion tension vs. relative elongation curve comprises only one maximum). The local maximum having the smallest elongation is called Discontinuous Expansion Threshold with a respective expansion tension of T1 and a respective relative elongation E1. The local maximum having the largest elongation is called Tearing Point with a respective expansion tension T2 and a respective relative expansion E2. Now, the absolute expansion tension minimum intermediate E1 and E2 is obtained from the expansion tension vs. relative elongation curve of the web material. This minimum is called Discontinuous Expansion Point having a respective expansion tension T3, and a respective relative elongation E3. The same procedure is carried out for samples A2 and A3.

Finally, the expansion tensions T2 and T3 for the three samples are averaged and the Relative Expansion Tension Reduction RETR of the submitted web material is obtained via the formula RETR = (T2A-T3A)/T2A where T2A and T3A are the respective averages of T2 and T3.

### Basis Weight Deviation Test

This test is used to determine the basis weight uniformity of a web material after it has been expanded by a certain amount and thus allows the detection of a certain type of expandable web materials.

Six identical samples of the submitted web material, named samples A1, A2, A3, B1, B2 and B3 hereafter, are prepared according to the sample preparation described in the Expansion Tension Test. Each sample should comprise at least one longitudinal expansion means. In case the sample size of the Expansion Tension Test is insufficient to fulfill this requirement, the Expansion Tension Test has to be modified to accommodate sufficiently large web material samples.

Sample A1 is submitted to the Expansion Tension Test. From the resulting expansion tension vs. relative elongation curve, that point of the curve is determined which has the same expansion tension as the Discontinuous Expansion Threshold and the smallest relative elongation larger than relative elongation corresponding to the Discontinuous Expansion Threshold. This point will be called Full Expansion Point hereafter. (If the Full Expansion Point does not exist, then the submitted web material is not discontinuously expandable and it is not testable according to this test.) This procedure is repeated with samples A2 and A3. The relative elongation E4 is computed by averaging over the relative elongation of the Full Expansion Points of samples A1, A2, and A3.

Sample B1 is mounted in the grips of a Zwick Model 1445, available from the Zwick GmbH & Co. of Ulm, Germany, according to the instructions of the Expansion Tension Test. Subsequently, sample B is expanded to the relative elongation E4 using the Zwick 1445. Finally, five square pieces of web material having a surface area of (1+/-0.01) square centimeter are cut from sample B1. The positions at which the pieces are cut out should be chosen equally distributed along the longitudinal dimension of sample B1 and should be centered with regard to the transverse direction. All these pieces of web material are weighed with a precision of one microgram. The same procedure is carried out with samples B2 and B3.

The Relative Basis Weight Deviation is obtained by dividing the standard deviation of the weights of the 15 pieces of web material by the average weight of the pieces.

### Contraction Tension At Discontinuous Expansion Test

This test used to determine to determine the contraction tension at the discontinuous expansion point.

Six identical samples of the submitted web material, named samples A1, A2, A3, B1, B2, and B3 hereafter, are prepared according to the sample preparation described in the Expansion Tension Test.

Sample A1 is submitted to the Expansion Tension Test. From the resulting expansion tension vs. relative elongation curve, the Discontinuous Expansion Point is determined. The same procedure is carried out for samples A2 and A3. The resulting relative elongations E3 are averaged, the average is called E3A hereafter.

Sample B1 is mounted in the grips of a Zwick Model 1445, available from the Zwick GmbH & Co. of Ulm, Germany, according to the instructions of the Expansion Tension Test. Subsequently, sample B1 is expanded to the relative elongation E3A corresponding to the Discontinuous Expansion Point using the Zwick 1445. After the grips of the Zwick Model 1445 have stopped, the force trying to reduce the longitudinal length of the web is measured. The same procedure is carried out for samples B2 and B3.

Finally, the Contraction Tension is obtained by averaging the forces measured for samples B1, B2, and B3.

While the test methods described above is useful for many of the web materials of the present invention it is recognized that the test method may have to be modified to accommodate certain executions of the web materials within the scope of the present invention.

## Claims

1. A web material having
- a longitudinal dimension and a transverse dimension substantially smaller than said longitudinal dimension
- at least one longitudinal expansion means characterized in that the Relative Expansion Tension Reduction is at least 50% when said web material is submitted to the Discontinuous Expansion Test.

2. A web material according to Claim 1, characterized in that the Relative Expansion Tension Reduction is at least 75% when said web material is submitted to the Discontinuous Expansion Test.

3. A web material according to Claim 1, characterized in that the Relative Expansion Tension Reduction is at least 90% when said web material is submitted to the Discontinuous Expansion Test.

4. A web material according to Claim 1, characterized in that the expansion tension at the Discontinuous Expansion Threshold is larger than 1 Newton per 0.0254 meter and the expansion tension at the Discontinuous Expansion Point is smaller than 0.5 Newton per 0.0254 meter when said web material is submitted to the Discontinuous Expansion Test.

5. A web material according to Claim 1, characterized in that the expansion tension at the Discontinuous Expansion Threshold is larger than 1 Newton per 0.0254 meter and the expansion tension at the Discontinuous Expansion Point is smaller than 0.5 Newton per 0.0254 meter when said web material is submitted to the Discontinuous Expansion Test.

6. A web material according to Claim 1, characterized in that the expansion tension at the Discontinuous Expansion Threshold is larger than 1 Newton per 0.0254 meter and the expansion tension at the Discontinuous Expansion Point is smaller than 0.1 Newton per 0.0254 meter when said web material is submitted to the Discontinuous Expansion Test.

7. A web material according to Claim 1, characterized in that the relative elongation at the Tearing Point of said web material is at least 50% when said web material is submitted to the Discontinuous Expansion Test.

8. A web material according to Claim 7, characterized in that the relative elongation at the Tearing Point of said web material is at least 75% when said web material is submitted to the Discontinuous Expansion Test.

9. A web material according to Claim 1, comprising a first region and a second region characterized in that said first region has a different basis weight than said second region.

10. A web material according to Claim 9, characterized in that said web material has a Relative Basis Weight Deviation of less than 10% when submitted to the Basis Weight Deviation test.

11. A web material according to Claim 9, characterized in that said web material has a Relative Basis Weight Deviation of less than 5% when submitted to the Basis Weight Deviation test.

12. A web material according to Claim 1, characterized in that said web material a contraction tension of less than 0.5 Newton per 0.0254 meter when said web material is submitted to the Contraction Force At Discontinuous Expansion Test.

13. A web material according to Claim 1, comprising at least one region characterized in that said region exhibits an monotonously increasing tensile force with increasing elongation when said region is submitted to the Expansion Tension Test.

14. An web material according to claim 1, comprising at least one longitudinal expansion means characterized in that said web material further comprises at least one tearable expansion obstruction means.

15. A process for making a web material comprising the steps of
- forming a web
- stabilizing said web
- incorporating longitudinal expansion means and tearable expansion obstruction means into said web.
